# EUROPEAN PATENT SPECIFICATION

(11) **EP 1 276 637 B1**
(45) Date of publication and mention of the grant of the patent: **07.03.2007**
(21) Application number: 00987475.1
(22) Date of filing: 21.12.2000
(51) Int. Cl.: B60R 1/00

(54) **FAULT-TOLERANT SYSTEM**
FEHLERTOLERANTES SYSTEM
SYSTEME TOLERANT AUX FAUTES

(30) Priority: 21.12.1999 GB 9930121; 31.01.2000 GB 0002121
(43) Date of publication of application: 22.01.2003
(73) Proprietor: Freescale Semiconductor, Inc., Austin, Texas 78735 (US)
(72) Inventor: LYNAS, Stephen, Hamilton, South Lanarkshire ML3 9HW (GB); JORDAN, Mark, John, South Lanarkshire ML9 3DP (GB); DUNLOP, John, Kennedy, Ayrshire KA19 7PT (GB); MATTHEWS, William, Stewart, Glasgow G76 0HH (GB); MAIOLANI, Mark, Glasgow G76 8SW (GB)
(74) Representative: Wharmby, Martin Angus
(86) International application number: PCT/EP2000/013345
(87) International publication number: WO 2001/045982

(56) References cited:
- EP-A- 0 229 559
- EP-A- 0 239 662
- EP-A- 0 754 991
- EP-A- 0 866 389
- WO-A-97/06487
- DE-A- 19 832 167
- US-A- 4 641 517
- US-A- 5 107 425
- US-A- 5 287 264

## Description

### Field of the Invention

This invention relates to fault-tolerant systems such as fault-tolerant suspension systems, fault-tolerant electronic combustion cyclinder valve control systems and to fault-tolerant steering systems.

### Background of the invention

In recent years, automobile manufacturers have sought to replace many expensive mechanical components with electronic components. Future automotive designs contemplate the removal of even more mechanical components, particularly in respect of control linkages to the engine, wheels, etc.., replacing them with 'by-wire' technology, partially derived from the 'fly-by-wire' technology associated with the aircraft industry.

For example, the hydraulic or mechanical suspension system or the steering system of an automobile may be replaced by a microprocessor controlled system, having a sensors or switches which, upon actuation by the driver or due to certain road conditions, transmits electronic signals to actuators located in proximity to the wheels. In a suspension system, the actuators apply damping to the vehicle suspension in dependence on the electronic signals. In a steering system, the actuators are arranged to turn the wheels of the vehicle in order to change the direction in which the vehicle is travelling in dependence on the electronic signals. Similarly, the mechanical or mechanical with hydraulic assistance cylinder valve system of an automobile may be replaced by a microprocessor controlled system, having sensors or switches which, upon actuation by the driver or combustion conditions, transmit electronic signals to valve actuators located in proximity to the combustion cylinders. The valve actuators are arranged to position the combustion cylinder intake and exhaust valves in order to change the combustion conditions within the cylinders in dependence upon the electronic signals.

In highly dependable applications, such as the suspension, steering and electronic valve control systems described above, the system must be fault-tolerant, such that if a fault should occur, at least some functionality of the system will continue. Known arrangements to provide fault-tolerance include redundant systems having two or more microprocessors which operate independently of each other and cross-check each other to detect faults.

A problem with this arrangement is that the larger the number of processors, the more cost is added to the system, and the fewer the number of processors, the greater the chances of all processors in the system developing a fault.

DE 198 32 167 discloses the control of an plurality of actuators via a central node.

In particular DE 198 32 167 relates to an electromechanical brake systemautomotive vehicles, which includes a pedal module and at least two brake modules. Further, a central module is provided. Connection between the aforementioned modules is made by a data bus. The data bus is provided redundantly. The central module can evaluate signals of a sensor system and examine them for their errors. Further, the central module can emit a corresponding nominal braking value which then is emitted to the brake modules. Thereupon, the brake modules determine appropriate actuating signals for the actuators which interact with the wheels in order to realize the driver's braking intention. The computer of the pedal module consists of four computers, each time two of them being combined to form a failsafe (fail-silent) structure. A consolidated driver's intention to brake is determined per computer pair and transferred to the data bus. In case of a computing error the affected redundant computer turns off, i.e., there is either an output of a flawless nominal braking value or of none.

This invention seeks to provide a fault-tolerant suspension system which mitigates the above mentioned disadvantages.

### Summary of Invention

The present invention provides a fault tolerant system for a vehicle as described in the accompanying claims.

In this way a fault tolerant system is provided which is cost effective, with improved fault-tolerance and enhanced fault-detection.

### Brief Description of Drawings

A fault tolerant suspension system and a fault-tolerant steering system in accordance with the present invention will now be described, by way of example only, with reference to the accompanying drawings in which:
FIG. 1 shows a block schematic diagram of a fault-tolerant suspension system in accordance with the present invention;
FIG. 2 shows a block schematic diagram of a fault-tolerant steering system in accordance with the present invention; and
FIG. 3 shows a block schematic diagram of a fault tolerant electronic valve control system in accordance with the present invention.

### Detailed Description

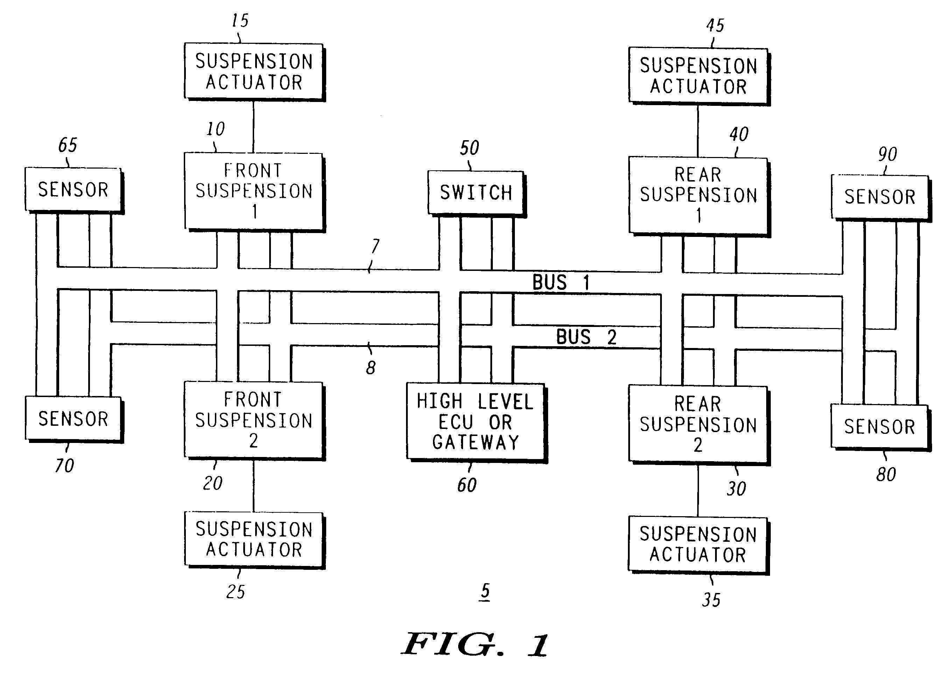

Referring to FIG.1, there is shown a fault-tolerant suspension system 5 for a vehicle (not shown) in accordance with a first embodiment of the present invention, including first, second, third, and fourth suspension nodes having electronic control units (ECUs) 10, 20, 30 and 40, which are distributed in mutually remote locations the vehicle. Each of the first, second, third and fourth ECUs 10, 20, 30 and 40, are coupled to associated first, second, third and fourth suspension actuators 15, 25, 34, 45 respectively.

The first, second, third, and fourth ECUs 10, 20, 30 and 40 respectively are also each coupled to first and second buses 7 and 8 respectively. An input node provides an input signal to the first 10, second 20, third 30 and fourth 40 ECUs via the first 7 and second 8 buses. Preferably, there are at least two input nodes, the first input node being coupled to an user operated input unit 50 and a second input node being coupled to a sensor. Each of the ECUs 10, 20, 30 and 40 receives an input signal from the input unit 50 and or an input signal from the sensor. In the embodiment shown in FIG. 1, there are five input nodes: the first input node being coupled to the input unit 50, and second, third, fourth and fifth input nodes being coupled to sensors 65, 70, 80 and 90 respectively. Each of the ECUs 10, 20, 30 and 40 receives an input signal from the input unit 50 and/or an input signal from one or all of the sensors 65, 70, 80, and 90.

The first and second buses 7 and 8 respectively are substantially identical and are both arranged to provide synchronous signals according to a Time Division Multiple Access scheme (TDMA) or similar scheme.

High level functions of current suspension systems may be integrated into the system 5 via a (high level) ECU 60 coupled to the buses 7 and 8, or by a gateway to an ECU (not shown).

The input unit 50, which is preferably a switch or switches, is arranged to provide user input signals to the system. For example, the user input signals may indicate whether a sports or a more comfortable suspension setting is required.

The sensors 65, 70, 80 and 90, which in the preferred embodiment are shown as being coupled to the first 7 and second 8 buses, are arranged to detect variations in the motion of the vehicle with respect to it's position and attitude to the surface upon which its is travelling. The sensors 65, 70, 80 and 90 provide signals to the ECUs 10, 20, 30 and 40 in dependence on the information detected by the sensors. The sensors 65, 70, 80 and 90 may be arranged to pre-process the information supplied to the ECUs.

Each of the first, second, third, and fourth ECUs 10, 20, 30, 40, can operate independently from the other ECUs if required, and are able to provide a processed result signal to the associated suspension actuator 15, 25, 35 or 45 in response to the signals received from the input unit 50 and/or sensors 65, 70, 80 and 90. In this way a basic suspension function is achieved, which is the minimum required for safe operation, not necessarily including higher level functions such as vehicle stability management. The provision of first and second buses 7 and 8 provides fault-tolerance in the case of a problem occurring therein.

In addition, each of the first, second, third, and fourth 10, 20, 30, 40, ECUs, performs a similar algorithm using the same signals received from the input unit 50 and/or the sensors 65, 70, 80 and 90, and provides the received signals and the resuit signals to the other ECU's. In this way each of the first, second, third, and fourth ECUS 10, 20, 30, 40, can detect incorrect operation by comparing its received signals and result signals with those received signals and result signals received from the other ECUs.

As four ECUs are available to check the same signals, it is possible to not only detect that there is a problem somewhere in the system 5, but also to identify the faulty ECU. A faulty ECU can therefore be identified, either by itself, or by the majority of the ECUs in the system 5 via a voting procedure, whereby the ECU having the most different results compared to the other ECUs is considered to be faulty.

After a fault has been identified, appropriate action can be taken, such as logging the fault, running diagnostics, or resetting or disabling the node. If an ECU is disabled due to a fault, the system 5 can be arranged such that the main suspension function will be redistributed across the operating ECUs.

As each ECU checks its operation against the other ECUs, faults can be detected that may be undetectable by using a simpler self-test type of checking in isolation. For example, an ECU may exhibit a fault where it decodes the received signals from the input unit 50 incorrectly, but the decoded value is still within the allowed range. The ECU would pass a self-test, and act on the faulty data if no other tests were performed, but with the described checking against other ECUs, the incorrect data would be detected.

As each ECU regularly re-transmits their received signals, the system 5 is able to survive faults that would otherwise cause it to be partially disabled. For example, if the first ECU 10 cannot access the signals from the input unit 50 and or sensors 65, 70, 80 and 90 directly due to a communications fault, it can use the electronic signals passed via the second, third or fourth ECUs 20, 30 and 40 respectively.

An advantage gained from this layout is that identical signals from the input unit 50 and/or sensors 65, 70, 80 and 90 are available to all pans of the system 5 at the same time. This simplifies the error-detection task, as when correctly operating, all ECUs can perform identical operations on identical signals, and any differences indicate a fault.

It will be appreciated that alternative embodiments to the one described above are possible. Although four nodes and ECUs are shown in FIG. 1. it will be appreciated that the invention applies to at least two nodes and at least two control means (ECU). For example, a single rear suspension ECU could be used to replace the third and fourth ECUs 30 and 40. whereby the single rear suspension ECU would be coupled to the third and fourth suspension actuators 35 and 45 respectively.

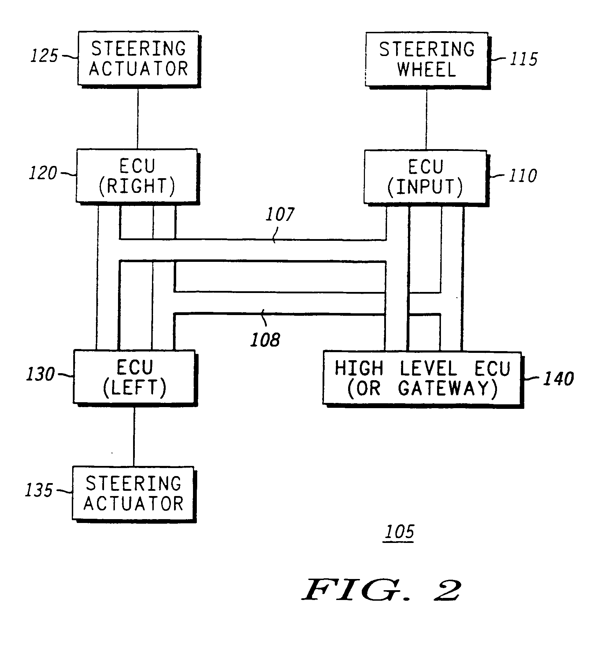

Referring now to FIG. 2. there is shown a fault-tolerant steering system 105 for a vehicle (not shown), including first, and second steering nodes having electronic control units (ECUs) 120, and 130, which are distributed in mutually remote locations the vehicle. Each of the first 120 and second 130 ECUs are coupled to associated first, and second steering actuators 125 and 135, respectively. Each steering actuator is arranged such that either can carry out the required actuation for the whole system in the event that the other fails.

The first 120 and second 130 ECUs are also each coupled to first and second buses 107 and 108, respectively. An user operated input unit 115 provides an input signal to the first 120, and second 130 ECUs via the first 107 and second 108 buses. The user operated input unit 115 preferably comprises a sensor 115, shown in FIG. 2 as a steering wheel sensor. Each of the ECUs 120. and 130 receives an input signal from the input unit 115.

The first and second buses 107 and 108 respectively are substantially identical and are both arranged to provide synchronous signals according to a Time Division Multiple Access scheme (TDMA) or similar.

High level functions of current steering systems may be integrated into the system 5 via a (high level) ECU 140 coupled to the buses 107 and 108, or by a gateway to an ECU (not shown).

The first 120 and second 130 ECUs can operate independently from each other if required, and are each able to provide a processed result signal to the associated steering actuator 125 and 135 in response to the input signals received from the input unit 115. In this way a basic steering function is achieved, which is the minimum required for safe operation, not necessarily including higher level functions such as vehicle stability management. The provision of first and second buses 107 and 108 provides fault-tolerance in the case of a problem occurring therein.

In addition, each of the first 120 and second 130 ECU performs a similar algorithm using the same input signal received from the input unit 115, and provides the input and the result signals to the other ECU. In this way each of the first 120 and second 130 ECUs can detect incorrect operation by comparing its received input signals and result signals with the input and result signals received from the other ECU.

In the preferred embodiment, a third additional ECU 110 is coupled between the input unit 115 and the first 107 and second buses 108. The third ECU operates in a similar way to that of the first 120 and second 130 ECUs in that it performs a similar algorithm using the same input signal received from the input unit 115 to generate a result signal, and provides the input and the result signals to the other ECUs. In this way each of the first 120, second 130 and third 110 ECUs can detect incorrect operation by comparing its received input signals and result signals with the input and result signals received from the other ECU.

The third ECU 110 is arranged in such a way such that if it is faulty, the input signal from the input unit 115 can still be transmitted to the first 120 and second 130 ECUs.

In the preferred embodiment, as three ECUs are available to check the same signals, it is possible to not only detect that there is a problem somewhere in the system 105, but also to identify the faulty ECU. A faulty ECU can therefore be identified, either by itself, or by the majority of the ECUs in the system 105 via a voting procedure, whereby the ECU having the most different results compared to the other ECLs is considered to be faulty.

After a fault has been identified, appropriate action can be taken, such as logging the fault, running diagnostics, or resetting or disabling the node. If an ECU is disabled due to a fault, the system 105 can be arranged such that the main steering function will be redistributed across the operating ECUs.

As each ECU checks its Operation against the other ECUs, faults can be detected that may be undetectable by using a simpler self-test type of checking in isolation. For example, an ECU may exhibit a fault where it decodes the input signals from the input unit 115 incorrectly, but the decoded value is still within the allowed range, The ECU would pass a self-test, and act on the faulty data if no other tests were performed, but with the described checking against other ECUs, the incorrect data would be detected.

An advantage gained from this layout is that identical signals from the input unit 115 are available to all parts of the system 105 at the same time. This simplifies the error-detection task, as when correctly operating, all ECUs can perform identical operations on identical signals, and any differences indicate a fault.

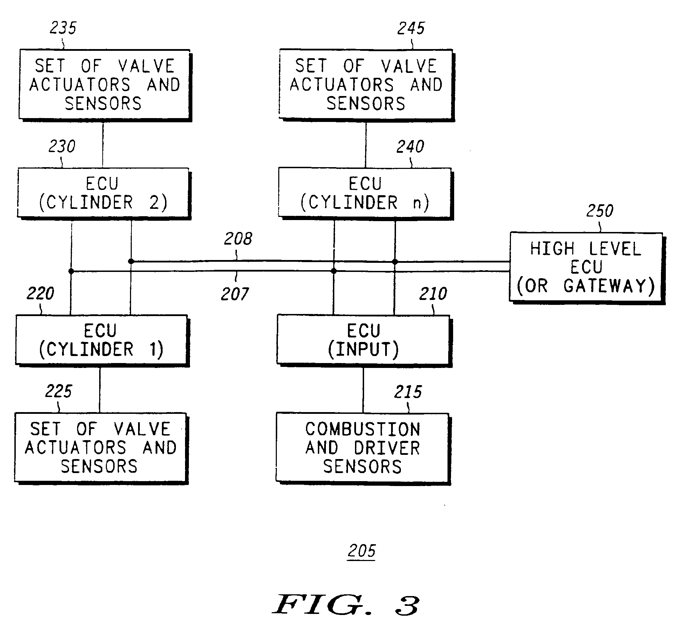

Referring now to FIG. 3, there is shown a fault-tolerant electronic valve control system 205 for a vehicle (not shown). The valve control system shown includes a first, second, and third node each having an electronic control unit (ECU) 220, 230 and 240, which may be distributed in a position proximate or locally to the cylinders in the vehicle. Each of the first, second and third ECUs are coupled to associated first 225, second 235 and third 245 valve actuators, or set of valve actuators, respectively. Each valve actuator is arranged such that any one ECU/valve actuator can carry out the required actuation for the whole system in the event that other ECU/valve actuators fail. It will be appreciated that any greater number (n) of nodes and/or associated ECUs and valve actuators may be used in this configuration, for example as required in an n-cylinder engine.

The first 220, second 230, and third (nth) 240 ECU are also each coupled to first and second buses 207 and 208 respectively. The fault-tolerant electronic combustion cylinder valve control system 205 also includes an input node for receiving an input signal. An input unit 215 may provide the input signal to the first, second, and third (nth) ECU via the first 207 and second 208 bus. The input unit preferably comprises, for example, a sensor 215. shown in the figure as a combustion and driver sensor, and each of the ECUs 220. 230 and 240 receives an input signal from the input unit 215.

The first and second buses 207 and 208 respectively are substantially identical and are both arranged to provide fast synchronous signals according to a Time Division Multiple Access scheme (TDMA) or similar.

High level functions of current powertrain systems may be integrated into the system 205 via a (high level) ECU 250 attached to the buses 207 and 208, or by a gateway to an ECU (not shown).

The first 220. second 230. and third (nth) 240 ECUs can operate independently from each other if required, and are able to provide a processed result signal to the associated valve actuator 225, 235 or 245 in response to the first signals received from the input unit 215. In this way a basic valve control function is achieved, which is the minimum required for safe operation, not necessarily including higher level functions such as emissions control or torque adjustment control. The provision of first and second buses 207 and 208 provides fault-tolerance in the case of a problem occurring therein.

In addition, each of the first 220, second 230, and third 240 (nth) ECUs performs a similar algorithm using the same first signals received from the input unit 215 and provides the first signals and the result signals to the other ECU's. In this way each of the first, second, and third (nth) ECUs can detect incorrect operation by comparing its received first signals and result signals with those of the other ECUs.

In a preferred embodiment, an additional ECU 210 is coupled between the input unit 215 and the first 207 and second 208 buses. The additional ECU operates in a similar manner to that of the first 220, second 230, and third (nth) ECUs in that it performs a similar algorithm using the same input signal received from the input unit 215 to generate a result signal, and provides the input and result signals to the other ECUs. In this way, each of the first, second and third ECUs can detect incorrect operation by comparing its received input signals and result signals with the input and result signals received from the other ECUs.

The additional ECU 210 is arranged in such a way such that if it is faulty, the input signal From the input unit 215 can still be transmitted to the first 220, second 230, and fourth (nth) 240 ECUs.

As there are multiple ECUs that are available to check the same signals, it is possible to not only detect that there is a problem somewhere in the system 205, but also to identify the faulty ECU. A. faulty ECU can therefore be identified, either by itself, or by the majority of the ECUs in the system 205 via a voting procedure, whereby the ECU having the most different results compared to the other ECUs is considered to be faulty,

After a fault has been identified, appropriate action can be taken, such as logging the fault, running diagnostics, or resetting or disabling the node. If an ECU is disabled due to a fault, the system 205 can be arranged such that the main cylinder valve control could be compensated for by the other operating ECU's.

As each ECU checks its operation against the other ECUs, faults can be detected that may be undetectable by using a simpler self-test type of checking in isolation. For example, an ECU may exhibit a fault where it decodes the received signals from the input unit 215 incorrectly, but the decoded value is still within the allowed range. The ECU would pass a self-test, and act on the faulty data if no other tests were performed, but with the described checking against other ECUs, the incorrect data would be detected.

An advantage gained from this layout is that identical signals from the input unit 215 are available to all parts of the system 205 at the same time. This simplifies the error-detection task, as when correctly operating, all ECUs can perform identical algorithmic operations on identical signals, and any differences indicate a fault.

It will be appreciated that alternative embodiments to those described above are possible.

## Claims

1. A fault tolerant system (5) for a vehicle, comprising:
an input node (50,65, 70, 80, 90); and
at least two nodes coupled to the input node, each node being arranged to control at least one actuator, each node having a control unit (10, 20, 30, 40) arranged to process an input signal received from the input node to generate a processed result signal for controlling the at least one actuator (15,25,35,45), and provide its input signal and processed result signal to the other control units (10, 20, 30, 40), via a communication bus (7,8),
wherein each of the control units (10, 20, 30, 40) of the at least two nodes is arranged to determine incorrect operation of one of the control units (10, 20, 30, 40) by comparing its input signal and processed result signal with the input signal and processed result signals received from the at least one other control unit (10, 20, 30, 40).

2. The system (5) of claim 1 wherein upon determination of incorrect operation, each control unit (10,20,30,40) uses a voting scheme to determine which of the processed result signal and comparison signals is to be used as a fourth signal to control each of the actuators (15,25,35,45).

3. The system (5) of any preceding claim wherein the at least two nodes are distributed in mutually remote locations in the vehicle.

4. The system (5) of any preceding claim wherein the input signal is adapted such that it is transmitted to the at least two nodes in a synchronous manner.

5. A fault tolerant suspension system for a vehicle comprising the system (5) of any preceding claim comprising three nodes and wherein the actuators are suspension actuators, each node being arranged to control one of three suspension actuators.

6. The system of claim 5 further comprising first and second input nodes, the first input node (50) for receiving an input signal from an user operated input unit and the second input node (65, 70, 80, 90) for receiving an input signal from a sensor, wherein the control unit (10, 20;30;40) of each node is arranged to process the input signals received at the first and the second input nodes to provide the processed result signal,

7. A fault tolerant steering system for a vehicle comprising the system (5) of any one of claims 1 to 5, wherein the actuators are steering actuators and the system (5) further comprises an user operated input unit (50) arranged to provide the input signal in response to operation thereof.

8. The system of claim 7 comprising three control units (110, 120, 130), a first control unit (120) being coupled to a first steering actuator (125), a second control unit (130) being coupled to a second steering actuator (135) and a third control unit (110) being coupled to the first and second control units (120, 130) and the user operated input unit (115), wherein upon detection of a fault, each of the control units (110, 120, 130) uses a voting scheme to determine which of the processed result signals and comparison signals is to be used as a fourth signal to control each of the first and second steering actuators (125, 135).

9. The system of claim 8 wherein each control unit (110, 120, 130) is also arranged to transmit the fourth signal to the at least two other control units, in order to verify whether the voting scheme has been used correctly.

10. A fault tolerant electronic valve control system for a vehicle comprising the system (5) of any one of claims 1 to 5 comprising three nodes and wherein the actuators are valve actuators, each node being arranged to control one of three valve actuators.

## Patentansprüche

1. Fehlertolerantes System (5) für ein Fahrzeug, das umfasst:
einen Eingangsknoten (50, 65, 70, 80, 90); und
zumindest zwei mit dem Eingangsknoten gekoppelte Knoten, wobei jeder Knoten eingerichtet ist, um zumindest einen Betätiger zu steuern, wobei jeder Knoten eine Steuereinheit (10, 20, 30, 40) aufweist, die eingerichtet ist, um ein von dem Eingangsknoten empfangenes Eingangssignal zu verarbeiten, um ein verarbeitetes Ergebnissignal zu erzeugen, um den zumindest einen Betätiger (15, 25, 35, 45) zu steuern, und ihr Eingangssignal und verarbeitetes Ergebnissignal den anderen Steuereinheiten (10, 20, 30, 40) über einen Kommunikationsbus (7, 8) zur Verfügung zu stellen,
wobei jede der Steuereinheiten (10, 20, 30, 40) der zumindest zwei Knoten eingerichtet ist, um fehlerhaften Betrieb von einer der Steuereinheiten (10, 20, 30, 40) zu ermitteln, indem sie ihr Eingangssignal und verarbeitetes Ergebnissignal mit dem Eingangssignal und verarbeiteten Ergebnissignalen, empfangen von der zumindest einen anderen Steuereinheit (10, 20, 30, 40), vergleicht.

2. System (5) nach Anspruch 1, wobei nach Ermittlung fehlerhaften Betriebs jede Steuereinheit (10, 20, 30, 40) ein Wählschema verwendet, um zu ermitteln, welches von dem verarbeiteten Ergebnissignal und Vergleichssignalen als ein viertes Signal verwendet werden soll, um jeden der Betätiger (15, 25, 35, 45) zu steuern.

3. System (5) nach einem der vorangehenden Ansprüche, wobei die zumindest zwei Knoten an wechselseitig voneinander entfernten Stellen in dem Fahrzeug verteilt sind.

4. System (5) nach einem der vorangehenden Ansprüche, wobei das Eingangssignal geeignet ist, zu den zumindest zwei Knoten in synchroner Weise übertragen zu werden.

5. Fehlertolerantes Aufhängungssystem für ein Fahrzeug, das das System (5) nach einem der vorangehenden Ansprüche umfasst, das drei Knoten umfasst und wobei die Betätiger Aufhängungsbetätiger sind, wobei jeder Knoten eingerichtet ist, um einen von drei Aufhängungsbetätigern zu steuern.

6. System nach Anspruch 5, das darüber hinaus einen ersten Eingangsknoten und einen zweiten Eingangsknoten umfasst, wobei der erste Eingangsknoten (50) ein Eingangssignal von einer anwenderbetätigten Eingabeeinheit empfängt und der zweite Eingangsknoten (65, 70, 80, 90) ein Eingangsignal von einem Sensor empfängt, wobei die Steuereinheit (10, 20, 30, 40) jedes Knotens eingerichtet ist, um die Eingangssignale, die an dem ersten Eingangsknoten und dem zweiten Eingangsknoten empfangen werden, zu verarbeiten, um das verarbeitete Ergebnissignal zur Verfügung zu stellen.

7. Fehlertolerantes Lenksystem für ein Fahrzeug, das das System (5) nach einem der Ansprüche 1 bis 5 umfasst, wobei die Betätiger Lenkbetätiger sind und das System (5) darüber hinaus eine anwenderbetätigte Eingabeeinheit (50) umfasst, die eingerichtet ist, um als Antwort auf ihre Betätigung das Eingangssignal zur Verfügung zu stellen.

8. System nach Anspruch 7, das drei Steuereinheiten (110, 120, 130) umfasst, wobei eine erste Steuereinheit (120) mit einem ersten Lenkbetätiger (125) gekoppelt ist, eine zweite Steuereinheit (130) mit einem zweiten Lenkbetätiger (135) gekoppelt ist und eine dritte Steuereinheit (110) mit der ersten Steuereinheit und der zweiten Steuereinheit (120, 130) und der anwenderbetätigten Eingabeeinheit (115) gekoppelt ist, wobei bei Detektion eines Fehlers jede der Steuereinheiten (110, 120, 130) ein Wählschema verwendet, um zu ermitteln, welches der verarbeiteten Ergebnissignale und Vergleichssignale als ein viertes Signal verwendet werden soll, um einen jeden von dem ersten Lenkbetätiger und dem zweiten Lenkbetätiger (125, 135) zu steuern.

9. System nach Anspruch 8, wobei jede Steuereinheit (110, 120, 130) auch eingerichtet ist, um das vierte Signal zu den zumindest zwei anderen Steuereinheiten zu übertragen, um zu verifizieren, ob das Wählschema korrekt verwendet worden ist.

10. Fehlertolerantes elektronisches Ventilsteuerungssystem für ein Fahrzeug, das das System (5) nach einem der Ansprüche 1 bis 5 umfasst, das drei Knoten umfasst und wobei die Betätiger Ventilbetätiger sind, wobei jeder Knoten eingerichtet ist, um einen von drei Ventilbetätigern zu steuern.

## Revendications

1. Système tolérant aux fautes (5) pour un véhicule, comprenant :
un noeud d'entrée (50,65, 70, 80, 90) ; et
au moins deux noeuds couplés au noeud d'entrée, chaque noeud étant agencé pour commander au moins un actionneur, chaque noeud possédant une unité de commande (10, 20, 30, 40) agencée pour traiter un signal d'entrée reçu depuis le noeud d'entrée pour générer un signal résultat traité destiné à commander l'au moins un actionneur (15, 25, 35, 45), et fournir son signal d'entrée et son signal résultat traité aux autres unités de commande (10, 20, 30, 40), par l'intermédiaire d'un bus de communication (7,8),
dans lequel chacune des unités de commande (10, 20, 30, 40) des au moins deux noeuds est agencée pour déterminer le fonctionnement incorrect de l'une des unités de commande (10, 20, 30, 40) en comparant son signal d'entrée et son signal résultat traité avec le signal d'entrée et les signaux résultats traités reçus depuis l'au moins une autre unité de commande (10, 20, 30, 40).

2. Système (5) selon la revendication 1, dans lequel lors de la détermination d'un fonctionnement incorrect, chaque unité de commande (10, 20, 30, 40) utilise un schéma de vote pour déterminer lequel du signal résultat traité et des signaux de comparaison doit être utilisé comme quatrième signal pour commander chacun des actionneurs (15, 25, 35, 45).

3. Système (5) selon l'une quelconque des revendications précédentes, dans lequel les au moins deux noeuds sont répartis à des emplacements mutuellement distants à l'intérieur du véhicule.

4. Système (5) selon l'une quelconque des revendications précédentes, dans lequel le signal d'entrée est adaptée de sorte qu'il est transmis aux au moins deux noeuds de manière synchrone.

5. Système de suspension tolérant aux fautes pour un véhicule comprenant le système (5) selon l'une quelconque des revendications précédentes, comprenant trois noeuds et dans lequel les actionneurs sont des actionneurs de suspension, chaque noeud étant agencé pour commander l'un des trois actionneurs de suspension.

6. Système selon la revendication 5 comprenant en outre un premier et un deuxième noeuds d'entrée, le premier noeud d'entrée (50) étant destiné à recevoir un signal d'entrée provenant d'une unité d'entrée actionnée par un utilisateur et le deuxième noeud d'entrée (65, 70, 80, 90) étant destiné à recevoir un signal d'entrée provenant d'un capteur, dans lequel l'unité de commande (10, 20, 30, 40) de chaque noeud est agencée pour traiter les signaux d'entrée reçus au niveau des premier et deuxième noeuds d'entrée pour fournir le signal résultat traité.

7. Système de direction tolérant aux fautes pour un véhicule comprenant le système (5) selon l'une quelconque des revendications 1 à 5, dans lequel les actionneurs sont des actionneurs de direction et le système (5) comprend en outre une unité d'entrée actionnée par un utilisateur (50) agencée pour fournir le signal d'entrée en réponse à l'actionnement de celle-ci.

8. Système selon la revendication 7 comprenant trois unités de commande (110, 120, 130), une première unité de commande (120) étant couplée à un premier actionneur de direction (125), une deuxième unité de commande (130) étant couplée à un deuxième actionneur de direction (135) et une troisième unité de commande (110) étant couplée aux première et seconde unités de commande (120, 130) et à l'unité d'entrée actionnée par un utilisateur (115), dans lequel lors de la détection d'une faute, chacune des unités de commande (110, 120, 130) utilise un schéma de vote pour déterminer lequel des signaux résultats traités et des signaux de comparaison doit être utilisé comme quatrième signal pour commander chacun des premier et deuxième actionneurs de direction (125,135).

9. Système selon la revendication 8, dans lequel chaque unité de commande (110, 120, 130) est également agencée pour transmettre le quatrième signal aux au moins deux autres unités de commandes, afin de vérifier si le schéma de vote a été utilisé correctement.

10. Système de commande de soupape électronique tolérant aux fautes comprenant le système (5) selon l'une quelconque des revendications 1 à 5, comprenant trois noeuds et dans lequel les actionneurs sont des actionneurs de soupape, chaque noeud étant agencé pour commander l'un des trois actionneurs de soupape.
